# EUROPÄISCHE PATENTSCHRIFT

(11) **EP 2 673 601 B1**
(45) Veröffentlichungstag und Bekanntmachung des Hinweises auf die Patenterteilung: **25.08.2021**
(21) Anmeldenummer: 12708079.4
(22) Anmeldetag: 06.02.2012
(51) Int. Cl.: G01G 19/12

(54) **VERFAHREN UND VORRICHTUNG ZUM MESSEN DES GEWICHTS EINER AUF EINE LADEFLÄCHE ZU HIEVENDEN LAST**
METHOD AND DEVICE FOR MEASURING THE WEIGHT OF A LOAD TO BE HOISTED ONTO A LOADING AREA
PROCÉDÉ ET DISPOSITIF DE MESURE DU POIDS D'UNE CHARGE À HISSER SUR UNE PLATE-FORME DE CHARGEMENT

(30) Priorität: 11.02.2011 CH 248112011
(43) Veröffentlichungstag der Anmeldung: 18.12.2013
(73) Patentinhaber: DIGI SENS Holding AG, 3280 Murten (CH)
(72) Erfinder: LUSTENBERGER, Martin, CH-1752 Villars sur Glâne (CH)
(74) Vertreter: Stump, Beat
(86) Internationale Anmeldenummer: PCT/CH2012/000031
(87) Internationale Veröffentlichungsnummer: WO 2012/106826

(56) Entgegenhaltungen:
- WO-A1-2008/131574
- DE-A1- 19 963 402
- GB-A- 2 461 273
- JP-A- 2006 052 084
- JP-A- 2008 002 913
- None

## Beschreibung

Die vorliegende Erfindung betrifft ein Messverfahren nach dem Oberbegriff von Anspruch 1 und eine Messvorrichtung zur Ausführung dieses Verfahrens nach dem Oberbegriff von Anspruch 5.

Transportgut wird häufig in Mulden oder Containern gesammelt und der entsprechende Behälter dann von einem LKW aufgenommen, transportiert und am Zielort wieder abgeladen. In der Regel ist dabei das Gewicht des gefüllten, d.h. vom LKW geladenen Behälters nicht bekannt, so dass das zulässige Gesamtgewicht des LKW unerkannt überschritten werden kann. Die Bestimmung des Gewichts eines Behälters bzw. der transportieren Last kann aber auch für die Berechnung der Transportkosten oder für sonstige Zwecke erforderlich sein.

Häufig sind Wiegeanlagen für LKW's am jeweiligen Lade- oder Zielort nicht vorhanden, was im Fall des zulässigen Gesamtgewichts besonders problematisch ist, da dann bis zur Wiegeanlage bereits ein Weg unerlaubt zurückgelegt worden und (bei Überlast) eine Rückkehr zur Reduktion des Transportgewichts unwirtschaftlich ist.

Mulden werden mit Hilfe eines Auslegers des LKW frei schwebend auf dessen Ladefläche gehievt, ebenso beispielsweise Abfallbehälter, die von entsprechend ausgestatteten Entsorgungsfahrzeugen über verschwenkbare Träger vor dem Frontende des Entsorgungsfahrzeugs ergriffen, über dessen Führerkabine gehievt und dann in von oben in den Beladeraum des Entsorgungsfahrzeugs gekippt werden. Hier sind Lösungen zur Messung des Gewichts der aufgeladenen Last bekannt geworden, die allerdings daran gebunden sind, dass die Last während dem Beladungsvorgang für einen Moment vollständig an den Beladungsorganen aufgehängt ist bzw. von diesen getragen wird. Die Messung des Gewichts erfolgt dann während diesem Moment.

Vermehrt werden jedoch Container mit gegenüber Mulden erheblich grösserer Transportlast transportiert, die auch erheblich grössere Abmessungen aufweisen, so dass die Beladesysteme für Mulden bzw. kleinere Transportbehälter nicht genügen.

US PS 5 601 393 und GB 2 332 425 zeigen Lasthebegeräte für LKW's, die als Hakengeräte ausgebildet und für die Beladung / Entladung von auch grossen Containern eingesetzt werden können. Dabei wird der Container am Frontende vom Haken des Lasthebegeräts ergriffen, über die Kante der Ladefläche des LKW gehoben und auf diese gezogen. Dabei schleift der Boden des Containers über die Kante der Ladefläche, die in der Regel dafür mit Rollen versehen ist. Das Lasthebegerät muss bei diesem wesentlich effizienteren Beladungsvorgang nicht das volle Gewicht des Containers tragen können, ebenso entfällt die aufwendige Befestigung am Hebegerät, wie es für einen während der Beladung frei schwebenden Container notwendig wäre.

Hier sind Vorschläge bekannt geworden, den Aufbau des LKW mit Messzellen zur Bestimmung des Gewichts der geladenen Last zu versehen, was aber aufwendige Einbauarbeiten im Chassis und im Fall der Reparatur den entsprechenden Aufwand (Entfernung des Aufbaus) erfordert. Eine solche Ausführungsform ist durch JP 2008 - 002913 von Shin Meiwa Ind. Co. Ltd. bekannt geworden. Der durch diese Ausführungsform erforderliche Aufwand ist erheblich, müssen doch Lastzellen in das Chassis verbaut werden, welche die gesamte Last eines Containers (bis zu 40 t oder mehr) tragen und gleichzeitig präzise Messwerte liefern können

Weiterer Stand der Technik ist durch die Druckschrift GB 2 461 273 A gegeben.

Entsprechend ist es die Aufgabe der vorliegenden Erfindung, ein Verfahren und eine Vorrichtung zu schaffen, welche ohne grösseren Aufwand bereits während dem Beladen/Entladen die Erfassung des Gewichts einer Last erlaubt, die mit einem Lasthebegerät über die Kante einer erhöhten Ladefläche verschoben und so auf diese hinauf gezogen oder von dieser herunter gestossen wird.

Diese Aufgabe wird gelöst durch ein Verfahren gemäss Anspruch 1 und eine Vorrichtung gemäss Anspruch 5.

Dadurch, dass eine momentan wirkende Kraft in einem Träger des Lasthebegeräts während dem Durchgang durch eine vorbestimmte Bewegungslage zur Bestimmung der Last erfasst wird, ergibt sich eine besonders einfache Möglichkeit diese rechnerisch zu bestimmen, mit dem zusätzlichen Vorteil, dass der Umbau eines Lasthebegeräts der oben genannten Art zur Messvorrichtung äusserst einfach ausfällt. Die Kosten dafür betragen nur einen Bruchteil derjenigen Kosten, die für die Ausrüstung eines LKW mit im Chassis angeordneten Lastmesszellen (d.h. Bestimmung des Gewichts des aufgeladenen Containers) notwendig sind.

Obschon die Erfindung anhand eines von einem LKW zu transportierenden Containers dargestellt wird, umfasst ihr Anwendungsbereich jede Art von Last, die für Beladung/Entladung einer erhöhten Fläche (die auch stationär sein kann) über deren Kante geschleift und so auf diese hinauf gezogen oder von dieser herunter gestossen wird.

Die Erfindung wird nachstehend anhand der Figuren näher erläutert. Es zeigt:
- Fig. 1a bis 1d: eine Ansicht eines Lastwagens für den Transport auch grosser Container, ausgerüstet mit einem Lasthebegerät der oben genannten Art,
- Fig. 2a: schematisch eine Ansicht der Ladefläche eines LKW gemäss den Figuren 1a bis 1d mit einer ersten Ausführungsform der vorliegenden Erfindung,
- Fig. 2b: eine vergrösserte Ansicht eines Trägerabschnitts des Trägers von Fig. 2a mit einer darin eingebauten Lastmesszelle,
- Fig. 3a: schematisch eine Ansicht von der Seite des hinteren Teils eines Lastwagens mit einer bevorzugten Abwandlung der ersten Ausführungsform gemäss Figur 2a,
- Fig 3b: schematisch eine Ansicht von oben auf das Chassis des Lastwagens gemäss der Seitenansicht von Fig. 3a mit der Anordnung der Rollen
- Fig 3c: schematisch die Ansicht AA von Fig. 3b
- Fig. 4a: eine Ansicht eines Trägers des Lasthebegeräts von Fig. 1a bis 1d gemäss einer zweiten bevorzugten Ausführungsform,
- Fig. 4b: eine vergrösserte Ansicht eines Trägerabschnitts des Trägers von Fig. 4a mit der darin eingebauten Lastmesszelle,
- Fig. 4c: die Lastmesszelle von Fig. 4b,
- Fig. 4d: eine Ansicht gemäss Fig. 4b, wobei eine weitere Ausführungsform einer Lastmesszelle vorgesehen ist, und
- Fig. 5: beispielhaft den Verlauf der Querkraft bzw. Schubspannung im Wiegefenster beim Beladen und Entladen entsprechend der zweiten bevorzugten Ausführungsform

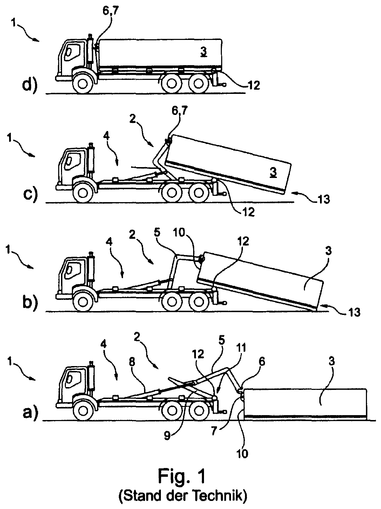

In den Figuren 1a bis 1d ist am Beispiel eines LKW 1 dargestellt, wie mit einem im Stand der Technik bekannten Lasthebegerät 2 ein Container 3 auf den LKW 1 aufgeladen werden kann.

Fig. 1a zeigt den LKW 1 mit einer Ladefläche 4, auf die der Container 3 zu verbringen ist. Dazu wird ein für die Verschiebung des Containers 3 verfahrbarer Träger 5 des Lasthebegeräts 2 ausgefahren, bis sein endseitig angeordneter Haken 6 in einen gegengleich ausgebildeten Griff 7 am vorderen Ende 10 des Containers 3 eingreifen kann. Der Antrieb des Trägers 5 erfolgt über einen Hydraulikzylinder 8. Je nach der Ausbildung des Lasthebegeräts 2 ist zusätzlich ein auf der Ladefläche 4 längs verfahrbarer Bock 9 vorgesehen, was erlaubt, durch das Lasthebegerät 2 grosse (hier: lange) Container 3 zu verladen.

Nach Fig. 1b ist der Träger 5 soweit eingefahren, dass das vordere Ende 10 des Containers 3 über die Kante 11 der Ladefläche 4 angehoben und ein erstes Stück weit auf diese hinauf gezogen worden ist. Dazu wird der Boden des Containers über die Kante 11 der Ladefläche 4 geschoben, die zu diesem Zweck Rollen 12 aufweist. Die Rollen 12 tragen bei diesem Vorgang einen wesentlichen Teil des Gewichts des Containers 3.

Fig. 1c zeigt den Beladevorgang in einer Phase, in der das hintere Ende des Containers 3 vom Untergrund abgehoben hat, so dass die Rollen 12 im Wesentlichen das ganze Gewicht des Containers 3 tragen. Fig. 1d schliesslich zeigt den Container 3 in Transportstellung auf der Ladefläche 4 des LKW 1.

Der Beladevorgang lässt sich in drei Phasen unterteilen:
1. Phase: Erfassen und Anheben des vorderen Endes 10 des Containers 3, danach Heranziehen des angehobenen Endes 10 über die hintere Kante 11 der Ladefläche 4 so weit, bis das hintere, auf dem Boden nachgezogene Endes 13 des Containers 3 bei noch weiterem Heranziehen abheben würde.
2. Phase: Weiteres Heranziehen des vorderen Endes 10 über die Ladefläche gegen vorne, so dass das hintere Ende 13 des Containers 3 vom Boden abhebt, soweit, bis der Container 3 mit seinem vorderen Ende 10 auf die Ladefläche 4 abgesenkt werden kann und so über seine Länge auf dieser aufliegt. Der Container 3 ist während der Verschiebung vom Untergrund abgehoben und liegt auf der Kante der Ladefläche 4 auf.
3. Phase: gegebenenfalls Vorziehen des über seine Länge auf der Ladefläche aufliegenden Containers 3. Der Container 3 ist während der Verschiebung vom Untergrund abgehoben und liegt auf der Kante der Ladefläche 4 auf.

Für den Entladevorgang werden diese Phasen im Wesentlichen umgekehrt durchlaufen, mit dem Unterschied, dass in der Regel nach der Bodenberührung des hinteren Endes 13 des Containers 3 der LKW nach vorne gefahren wird, um den Entladevorgang zu vollenden.

Die Anwendung der vorliegenden Erfindung ist nicht an das beispielhaft gezeigte Lasthebegerät gemäss den Figuren 1a bis 1d gebunden, sondern immer dann anwendbar, wenn mit einem Lasthebegerät der in den Figuren 1a bis 1d gezeigten Art (d.h. mit einem oder mit mehreren für die Verschiebung einer Last verfahrbaren Trägern) eine Last über die Kante einer erhöhten Ladefläche geschoben und so auf diese hinauf gezogen oder von dieser herunter gestossen wird.

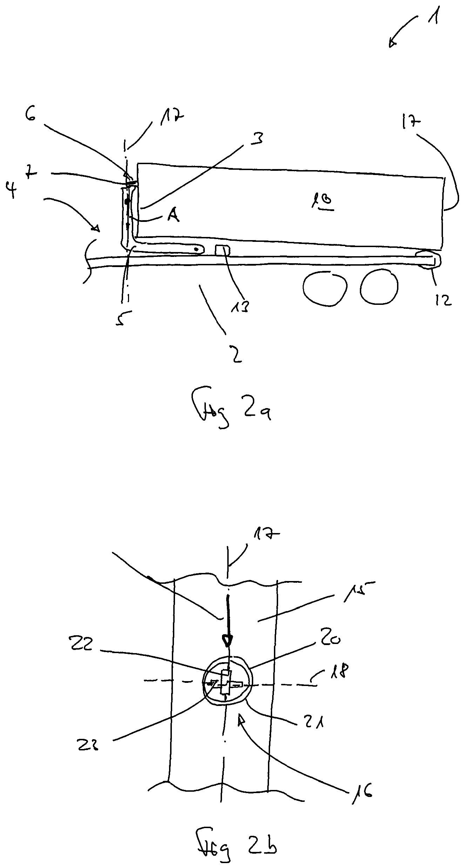

Fig. 2a zeigt schematisch eine Ansicht der Ladefläche eines 1 LKW gemäss den Figuren 1a bis 1c, wobei zur Entlastung der Figur der vordere Teil des LKW mit dem Führerhaus, ebenso der Hydraulikzylinder 8 sowie der Bock 9 weggelassen ist. Hingegen ist hier ein Auflager 13 dargestellt, auf welchem der Container 10 nach vollendetem Arbeitsvorgang des Lasthebegeräts 2 aufgesetzt wird. In der Figur ist dargestellt, dass der Container 10 noch nicht aufgesetzt ist, d.h. die Bewegungslage des Trägers 5 des Lasthebegeräts 2 einer Lage unmittelbar vor dem Aufsetzen bzw. dem Aufsetzpunkt der Last auf der Ladefläche 4 entspricht. Dadurch liegt der Container 10 einerseits auf den Rollen 12 auf und hängt andererseits über seinen Griff 7 im Haken 6.

Im Trägerabschnitt 15, der seinerseits den Haken 6 trägt, ist eine Lastmesszelle 16 angeordnet, welche eine im Trägerabschnitt 15 während der Arbeitsbewegung des Lastmessgeräts 2 wirkende Kraft misst. Bei der in der Figur gezeigten Ausführungsform befindet sich die Lastmesszelle in der Längsachse 17 des Trägerabschnitts 15, wobei die gemessene Kraft die im Trägerabschnitt 15 wirkende Axialkraft A ist, erzeugt durch den Griff 7. In der dargestellten Bewegungslage unmittelbar vor dem Aufsetzpunkt ist der Trägerabschnitt 15 im Wesentlichen vertikal ausgerichtet, so dass eine allfällige im Trägerabschnitt 15 wirkende Querkraft vernachlässigbar klein ist.

Die Lastmesszelle 16 ist weiter betriebsfähig mit einem in der Figur nicht dargestellten Rechner verbunden, der ausgebildet ist, in die Kraft-Signale der Lastmesszelle 16 auszuwerten und anhand dieser das Gewicht der Last (d.h. des Containers 10) zu ermitteln. Dies geschieht erfindungsgemäss, indem der Rechner aus der Geometrie des Containers 10 und der Stellung des Lasthebegeräts 2 den Moment erkennt, in welchem die Rückseite 17 des Containers 10 sich gerade über den Rollen 12 befindet, wie dies in der Figur dargestellt ist. Unter der Annahme einer gleichmässigen Füllung des Containers 10 (d.h. unter der Annahme, dass der Schwerpunkt des Containers 10 in der Mitte zwischen den Rollen 12 und dem Griff 7 liegt) ist aufgrund der gemessenen Axialkraft A das Gewicht des Containers 10 leicht zu berechnen. Diese Annahme liefert für die meisten Ladungen (beispielsweise Schüttgüter) genügend genaue Gewichtsresultate.

Container für den LKW-Transport sind in der Regel genormt. Entsprechend enthält ein Speicher des Rechners bevorzugt einen Katalog von Normdaten von solchen Containern, wobei der Fahrer des LKW vor Ort den zu ladenden Container über eine Eingabeeinheit des Rechners aus dessen Katalog auswählen kann. Alternativ kann der Fahrer auch über die Eingabeeinheit die konkreten Masse (hier: die Länge des Containers) eingeben, so dass der Rechner die notwendigen Rechenoperationen aufgrund der Eingabe ausführen kann.

Der Fachmann ist ohne Weiteres in der Lage, einen handelsüblichen Rechner samt dem zugehörigen Speicher in einem LKW betriebsfähig anzuordnen und die entsprechenden Programme für die Berechnung des Gewichts der Last zu schreiben und im Rechner zu installieren.

Fig. 2b zeigt eine vergrösserte Ansicht des Trägerabschnitts 15 des Trägers 5 der Lastmesseinrichtung 2 von Fig. 2a mit einer darin eingebauten Lastmesszelle 16, die als zylindrisches Rohr 20 ausgebildet und in eine kreisrunde Bohrung 21 des Trägerabschnitts 15 eingesetzt und dort vorzugsweise eingeschweisst ist.

Die Axialkraft A bzw. die daraus resultierenden Druckspannungen haben durch die Verkürzung des Trägerabschnitts 15 eine elliptische Verformung des in die Bohrung 31 eingesetzten Rohrs 30 zur Folge, wobei die Hauptachse 18 der resultierenden Ellipse quer zur Richtung der Längsachse 17 und deren Nebenachse in Richtung der Längsachse 17 verläuft. Im Rohr 20 sind zwei Deformationssensoren 22 und 23 angeordnet, der Deformationssensor 22 in Richtung der Längsachse 17 und der Deformationssensor 23 quer dazu, d.h. im Winkel von im Wesentlichen 90° zueinander.

Bei veränderter Axialkraft A misst der Deformationssensor 22 die Verkleinerung des ihm zugeordneten Durchmessers des Rohrs 20, und der Deformationssensor 23 die Vergrösserung des ihm zugeordneten Durchmessers des Rohrs 20. Diese Messdaten ergeben die Geometrie der elliptischen Verformung des Rohrs 30 und damit den Betrag der Axialkraft A und erlauben die Berechnung des Gewichts der Last, wie dies oben dargestellt ist.

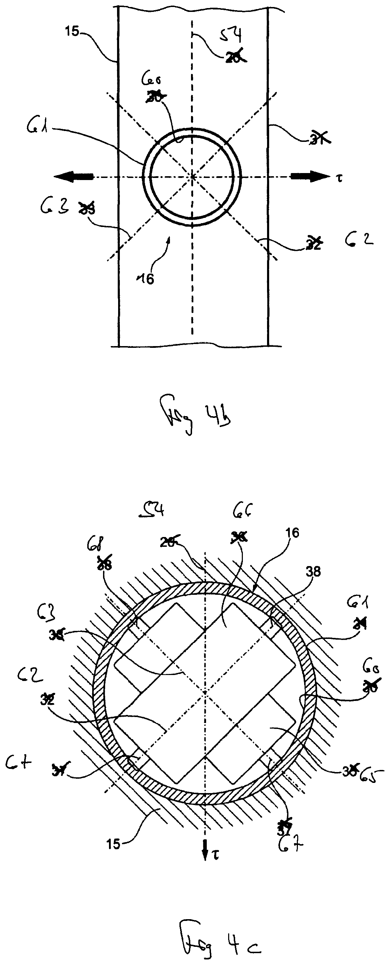

Bevorzugt sind die Deformationssensoren 22 und 23 als Schwingsaitensensoren ausgebildet, die dem Fachmann bekannt sind (s. dazu auch die Beschreibung zu den Figuren 4b und 4c nachfolgend).

Solch eine Lastzelle 16 kann mit Hilfe einer einfachen Bohrung, d.h. praktisch ohne Aufwand sehr leicht in einen Träger 5 eingesetzt werden. Insbesondere müssen die Aufbauten des LKW weder demontiert noch verändert werden.

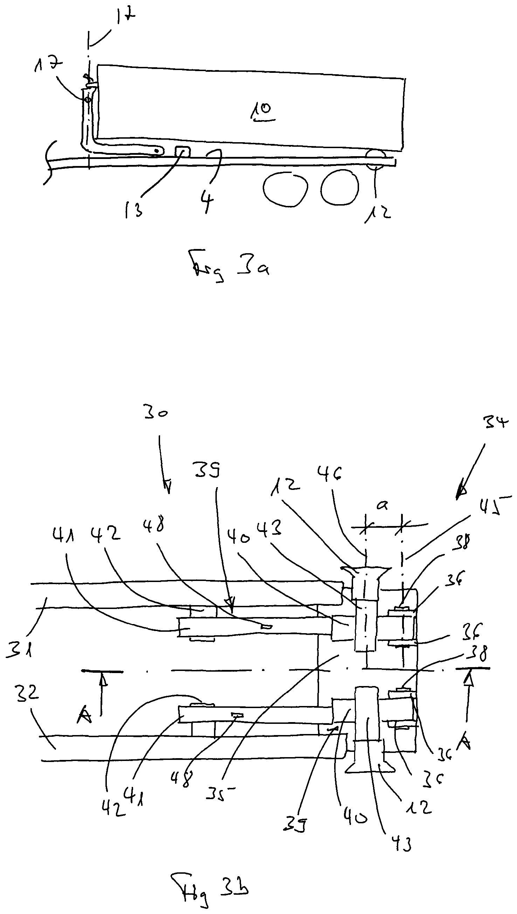

Fig. 3a zeigt schematisch die Ansicht des hinteren Teils des Lastwagens gemäss Figur 2a, wobei eine bevorzugte Abwandlung der anhand der Figuren 2a und 2b gezeigten Ausführung dargestellt ist. Entgegen der Ausführungsform von Figur 2a befinden sich die Rollen 12 nicht am hinteren Ende der Ladefläche 4, sondern sind etwas gegen vorne versetzt angeordnet. Solche Aufbauten sind dem Fachmann grundsätzlich bekannt.

Diese Anordnung ist in Figur 3b näher dargestellt, wobei die Figur schematisch eine Ansicht von oben auf das Chassis 30 des Lastwagens 1 (Figuren 1a bis c und Figur 2a) zeigt.

Ersichtlich sind zwei Längsträger 31,32 des Chassis 30, wie sie ein ohne Aufbauten ausgelieferter LKW in der Regel besitzt. Der hier beipsielhaft dargestellte Aufbau 34 für den Transport einer Last, hier von Containern 10, besteht aus einer unten an die Längsträger 31,32 angeschweissten Trägerplatte 35, die zwei Paare von vertikal abstehenden kurze Platten 36 mit Augen 37 für die Aufnahme je einer Achse 38 trägt, über die wiederum ein Rollenträger 39 verschwenkbar angelenkt ist. Jeder Rollenträger 39 weist ein Winkelstück 40 auf, das auf der einen Seite an der ihr zugeordneten Achse 38 gelagert und an der anderen Seite in einen nach vorne laufenden Träger 41 ausläuft, wobei der Träger 41 in Betriebsposition auf einem Auflager 42 aufliegt. Jedes Winkelstück 40 trägt wiederum ein Wellenlager 43 für die Welle 44 einer Rolle 12.

Die nach oben gerichtete Kröpfung der beiden Winkelstücke 42 erlaubt eine erhöhte Lagerung der Rollen 12 derart, dass deren Lauffläche über die obere Seite der Längsträger 31,32 hervorragt, so dass eine auf den Rollen 12 auf eine Ladefläche 4 (Figur 2a) heraufgezogene Last leicht bewegt werden kann. Die verschwenkbare Lagerung der Rollenträger 39 an den Achsen 38 erlaubt, diese für die Montage und Wartung der Rollen 12 hochzuklappen.

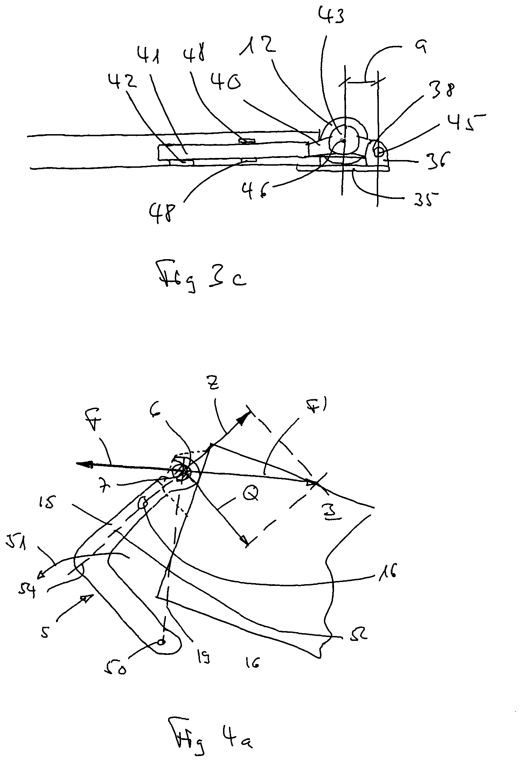

Figur 3c zeigt die Ansicht AA von Figur 3b.

Aus den Figuren 3b und 3c ergibt sich, dass ein Abstand a besteht zwischen der geometrischen Längsachse 45 der Achsen 38 und der geometrischen Drehachse 46 der Rollen 12 bzw. der ungefähren Berührungslinie eines auf den Rollen 12 laufenden Containers. Bei Belastung der Rollenträger 39 durch einen über die Rollen 12 laufenden Container wird somit ein Biegemoment in der Grösse a ▪ R in die Rollenträger 39 eingeleitet, wobei a wie erwähnt der Abstand der Krafteinleitungsstelle in den Rollenträger 39 von dessen Lagerung am Chassis 30 ist und R die Kraft, die durch den aufliegenden Container auf die betreffende Rolle 12 wirkt. Dieses Biegemoment ist unabhängig von der Länge des nach vorne laufenden Trägers 41 bzw. vom Ort des Auflagers 42, d.h. über die Länge des Rollenträgers 39 konstant. Damit biegt sich der nach vorne laufende Träger 41 über seine Länge konstant durch, welche Durchbiegung durch Sensoren 48 detektiert und deren Durchbiegungs-Signale im Rechner ausgewertet werden können: aus der Durchbiegung ergibt sich die Biegelinie der Träger 41, zusammen mit deren Geometrie ergibt sich das wirkende Moment, und mit dem bekannten Abstand a die jeweilige auf eine Rolle 12 wirkende Kraft R. Vorteilhaft ist hier, dass die Lage der Sensoren 48 ortsunabhängig ist, also beim erfindungsgemässen Umbau im konkreten Fall dort platziert werden können, wo der Aufwand dafür am kleinsten ist.

Die Sensoren 48 für die Durchbiegung der Träger 41 können als einfache Dehnmessstreifen ausgebildet sein. Die Anordnung von Dehnmessstreifen für die Messung der Durchbiegung eines Trägers sowie die Auswertung der Messdaten sind dem Fachmann bekannt.

Alternativ kann (in der Figur nicht gezeigt) auch ein Sensor für die im Träger wirkende Querkraft verwendet werden. Bevorzugt wird dann eine Lastmesszelle nach Fig. 4b und 4c in den Rollenträger 39 (s. die Beschreibung zu diesen Figuren) eingesetzt. Solch eine Lastmesszelle besteht aus einem Rohr mit zwei Deformationssensoren, wobei das Rohr hier im Rollenträger 39 von Figur 3c senkrecht zur Bildebene in diesen einzusetzen ist und die Deformationssensoren senkrecht zu einander, aber im Winkel von 45° zur Horizontalen (in Figur 3c zur Längsachse des Rollenträgers 39) angeordnet werden. Wirkt ein Gewicht auf die Rollen 12, wirkt eine entsprechende Querkraft im Rollenträger 39 (bzw. entsprechende Schubspannungen), welche das Rohr verformen, wobei die Verformung wiederum durch die Deformationssensoren erfasst und über deren Mess-Signale vom Rechner bestimmt werden kann. Aus der Verformung und der Geometrie des Rollenträgers 39 kann der Rechner weiter die Querkraft und damit das auf die Rollen 12 wirkende Gewicht bestimmen. Da die Querkraft über die Länger des Rollenträgers 12 konstant ist, ergibt sich wiederum ein problemloser Einbau der entsprechenden Lastmesszelle, der mit geringsten Kosten einher geht.

Damit ergibt sich eine Drei-Punkt Messung für das Gewicht einer auf die Ladefläche 4 gehievten Last, d.h. der Messung der Axialkraft A und den auf die jeweilige Rolle 12 wirkenden Kräften R. Solch eine Drei-Punkt Messung hat den Vorteil, dass auch das Gewicht von nicht homogen beladenen Containern mit praktisch jeder gewünschten Präzision festgestellt werden kann, wobei die Kosten gegenüber den konventionellen Lastmessgeräten nach wie vor klein sind und sowohl die Lastzelle 16 als auch die Dehnmessstreifen 48 (oder der Lastzelle 16 entsprechende rohrförmige Querkraftsensoren) mit geringstem Aufwand an einem vorbestehenden Lasthebegerät 2 installiert werden können, wiederum ohne Veränderung oder Demontage des Aufbaus. Dies gilt ebenso für den zugehörigen Rechner, der die Signale der Lastzelle 16 bzw. der Dehnmessstreifen 48 verarbeitet.

Figur 4a zeigt eine weitere Ausführungsform der vorliegenden Erfindung. Dargestellt ist eine Ansicht des abgewinkelten Trägers 5 des Lasthebegeräts 2 von Fig. 1a bis 1d in der Position von Fig. 2c, also in der 2. Phase des Lasthebevorgangs. Der Träger 5 ist hier bevorzugt als Vierkantrohr ausgebildet (kann jedoch auch andere Querschnitte aufweisen) und befindet sich über seinen Haken 6 im Eingriff mit dem Griff 7 des Containers 3. Die restlichen Elemente des Lasthebegeräts 2, ebenso die Auflagefläche 4 des LKW, sind zur Entlastung der Figur weggelassen. Erfindungsgemäss weist ein solches zum Lastmessgerät modifiziertes Lasthebegerät eine in einem Trägerabschnitt 15 des Trägers 5 angeordnete Lastmesszelle 16 zur Bestimmung der im Trägerabschnitt 15 während der Arbeitsbewegung wirkenden Querkraft Q auf.

Wiederum ist ein auch hier zur Entlastung der Figur nicht dargestellter Rechner an einem geeigneten, durch den Fachmann bestimmbaren Ort am Lastmessgerät selbst oder im LKW (bevorzugt in der Fahrerkabine) vorgesehen, der z.B. über eine geeignete (durch den Fachmann ohne weiteres zu bestimmende) Kabelverbindung die Querkraftsignale der Lastmesszelle 16 empfangen und auswerten kann, um aus diesen rechnerisch das Gewicht der bewegten Last zu ermitteln, wie dies weiter unten dargestellt wird.

Da sich der Träger 5 um sein Lager 50 in Richtung des Pfeils 51 verschwenkt, übt er auf den Griff 7 des Containers 3 eine zu seinem Verschwenkradius 52 senkrecht stehende Zugkraft F aus, deren auf den Träger 5 wirkende Reaktion F' ihrerseits in zwei Komponenten zerlegbar ist, nämlich in eine senkrecht zur Längsachse 54 des Trägerabschnitts 15 gerichtete Komponente Q, die der im Trägerabschnitt 15 wirkenden Querkraft entspricht, und in eine in der Längsachse 20 liegende Zugkraft Z.

Der Trägerabschnitt 15 deformiert sich durch die in ihm aufgrund der Kraft F' herrschende Beanspruchung, wobei die Lastmesszelle 16 bei der vorliegenden Ausführungsform nun derart ausgebildet ist, dass sich aufgrund ihrer Deformation die herrschende Querkraft Q leicht ermitteln lässt, wie dies unten in Bezug auf Fig. 4b näher beschrieben ist. Die Ermittlung der Querkraft Q ist besonders vorteilhaft, da die Querkraft Q über die Länge des Trägerabschnitts 15 konstant bleibt, also die Lastmesszelle 16 im Trägerabschnitt 15 an einem für deren Montage günstigen Ort einfach eingesetzt werden kann, ohne dass sonstige Randbedingungen im Hinblick auf die Beanspruchung des Trägerabschnitts 15 berücksichtigt werden müssen, wie dies z.B. bei der Ermittlung der Biegung des Trägerabschnitts 15 Trägers der Fall wäre, da die Biegemomente proportional zum Abstand der wirkenden Kraft wachsen würden.

Mit anderen Worten ist es so, dass durch die erfindungsgemässe Verwendung der Querkraft als Ausgangsgrösse für die Ermittlung des Gewichts des Containers 3 eine besonders einfache, leicht vorzunehmende und damit kostengünstige Modifikation eines Lasthebegeräts zur Lastmesseinrichtung möglich wird.

Aus der Figur 4a ist ersichtlich, dass die Geometrie der Lastmesseinrichtung (bzw. des Lasthebegeräts 2) in Verbindung mit der Geometrie des Containers 3 die Grösse der Querkraft Q bei gegebener Zugkraft F bestimmt. Dabei wird die Länge und Höhe der Auflagefläche 4, d.h. die Lage der Rollen 12 zur Geometrie der Lastmesseinrichtung gezählt.) Bei gegebener Geometrie, d.h. bei bekannten Abmessungen des auf einen konkreten LKW zu ladenden Containers, ist umgekehrt für jede momentane Lage des Containers 3 (und damit für jede Bewegungslage des Trägers 5) aus der Querkraft Q die Kraft F bestimmbar, und aus dieser wiederum durch geeignete Rechnung das Gewicht des Containers 3.

Auch hier kann angemerkt werden, dass die Masse der üblicherweise verwendeten Container (insbesondere die Höhe des Griffs 7) genormt sind, so dass Standardwerte verwendet werden können, die in einem Katalog zusammenfassbar sind, der im Rechner zur Bestimmung des Lastgewichts abgespeichert werden kann. Natürlich ist es auch denkbar, solche Daten in Speicherchips abzulegen, die dann als externe Datenträger mit dem Rechner verbunden werden können. Ebenfalls denkbar ist es, dass die den Container 3 betreffenden Daten (seien dies Normwerte oder nicht) in einem zum Container gehörenden Chip gespeichert sind, und von diesem ausgelesen und in den Rechner eingegeben werden.

Sind die Masse der Last, d.h. des Containers 3 nicht bekannt, lässt sich die Höhe des Griffs 7 aus der Stellung der Lastmesseinrichtung beim Ergreifen des Containers 3 mindestens annähernd durch den Rechner ermitteln und für die Berechnung des Gewichts der Last verwenden. Ebenso betreffend der Länge des Containers 3, wo neben den Daten aus der Stellung der Lastmesseinrichtung während dem Verschieben der Last noch die Daten aus einem Abstandssensor verwendet werden, der auf der Ladefläche 4 angeordnet ist, vorzugsweise nahe der Kante 11, und den Abstand zwischen der Ladefläche 4 und dem Boden des Containers 3 detektiert. Durch diesen Abstand wird die Schräglage des Containers 3 erkannt, und aus der Schräglage zusammen mit der Höhe des Griffs 7 im Moment des Abhebens des hinteren Endes 13 des Containers 3 dessen Länge. Die Verwendung anderer Neigungssensoren ist ebenfalls erfindungsgemäss. Der Moment des Abhebens wiederum kann durch einen geeigneten Sensor oder dadurch erkannt werden, dass der Container nicht mehr (oder vermindert) rüttelt, wobei vorzugsweise der Grad des Rüttelns aus einem sich abrupt hin- und her verändernden Querkraftanteil im Trägerabschnitt 15 bestimmt wird.

Soll in der Bewegung, also dynamisch, gemessen werden, kann das hier durch den Abstandssensor gegebene Klinometer durch eine Beschleunigungsmessvorrichtung ergänzt werden. Damit können die Messwerte um die Beschleunigung bereinigt werden.

Weiter ist die Geometrie der konkret verwendeten Lastmesseinrichtung jeweils bekannt und kann ebenfalls als geeigneter Datensatz im Rechner abgelegt werden.

Fig. 4b zeigt eine vergrösserte Ansicht eines Trägerabschnitts 15 des Trägers 5 von Fig. 2 mit der darin eingebauten Lastmesszelle 16, die als zylindrisches Rohr 60 ausgebildet und in eine kreisrunde Bohrung 61 des Trägerabschnitts 15 eingesetzt und dort vorzugsweise eingeschweisst ist.

Die Querkraft Q bzw. die daraus resultierende Schubspannung T hat eine elliptische Verformung des in die Bohrung 61 eingesetzten Rohrs 60 zur Folge, wobei die Hauptachse der resultierenden Ellipse je nach der Richtung der wirkenden Schubspannung T in Richtung der Achse 62 oder der Achse 63, und deren Nebenachse auf der jeweils anderen Achse 63 oder 62 liegt.

Fig. 4c zeigt eine vergrösserte Ansicht der Lastmesszelle 16 von Fig. 3, wobei wiederum das in die Bohrung 61 eingeschweisste Rohr 60 ersichtlich sind, zudem zwei in das Rohr 60 eingesetzte Deformationssensoren 65,66. Die Sensoren 65,66 liegen auf den zu Achsen 62,63 der zu erwartenden Ellipse, die der Querschnitt des Rohrs 60 aufgrund der wirkenden Querkraft Q einnimmt. Zusammenfassend stehen die Sensoren 65,66 im Wesentlichen im rechten Winkel zu einander und im Wesentlichen im Winkel von 45° zur Längsachse 52 des Trägerabschnitts 15.

Jeder der beiden Sensoren 65,66 hat zwei Krafteingänge 67,68 welche beispielsweise je in eine geeignet angebrachte Vertiefung in der Wand des Rohres 60 mit Vorspannung eingesetzt sind. Eine weitere Möglichkeit des Einsetzens der Sensoren 65,66 besteht darin, die Krafteingänge 67,68 an je zwei im Rohr 60 eingeschweisste Laschen anzuschrauben. Der an sich bekannte innere Aufbau der Sensoren 65,66 als Schwingsaitensensoren bewirkt beispielsweise, dass sich die Spannung einer schwingenden Saite in jedem der Sensoren 65,66 ändert, wenn die wegabhängige Kraft auf die beiden Krafteingänge 67,68 ändert. Damit wird die Verkürzung des einen Durchmessers des Rohres 60 und die Vergrösserung des anderen gleichzeitig gemessen und durch einen Rechner miteinander in Beziehung gesetzt. Die gleichzeitige Messung am gleichen Orte ist an sich nicht notwendig (es könnten also - wegen der Konstanz der Querkraft - die Deformationssensoren an verschiedenen Orten im Trägerabschnitt 15 untergebracht sein), hat aber den Vorteil, dass die Temperaturen der beiden Sensoren 65,66 ebenfalls die gleichen sind, so dass die Messresultate im Wesentlichen von einem Temperaturgang der Sensoren befreit sind.

Anstatt mit schwingenden Saiten kann die Verformung des Rohrs 60 selbstverständlich über andere, der Messung zugängliche, Parameter bestimmt werden. Es sind dies beispielsweise geeignet angebracht Dehnmessstreifen oder optische Messmethoden mit Brillouin-Sensoren.

Zum Schutz vor störenden Umwelteinflüssen, wie Staub, Feuchtigkeit und mechanischen Einflüssen kann das Rohr 60 auf beiden Seiten so verschlossen werden, diese Einflüsse fern gehalten werden. Der Fachmann erkennt, dass diese Ausführungen auch auf die in der Figur 2b dargestellte Ausführungsform der Lastmesszelle 16 zutreffen.

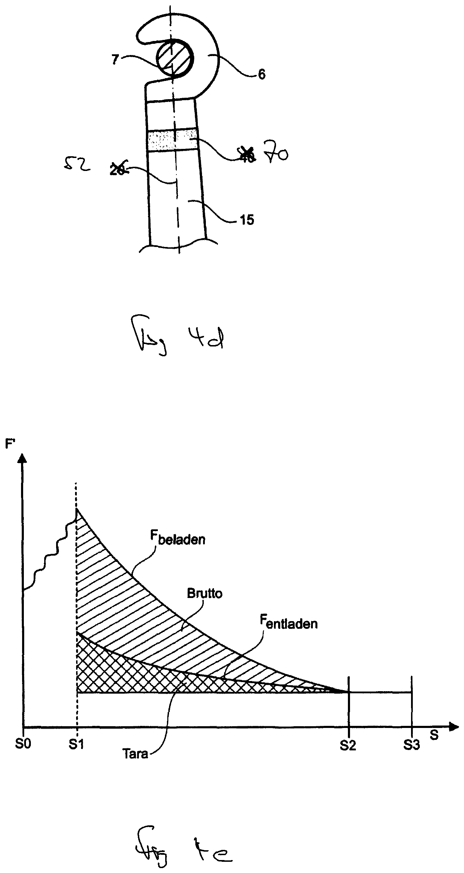

Fig. 4d zeigt einen Ausschnitt aus der Ansicht von Fig. 4a, wobei eine weitere Ausführungsform einer Lastmesszelle 70 vorgesehen ist, angeordnet zwischen dem Haken 6 und dem anschliessenden Trägerabschnitt 15.

Die Befestigung der Lastmesszelle 70 erfolgt so, dass von dieser nur die Kräfte (bzw. Schubspannungen) in Richtung der Querkraft Q (d.h. senkrecht zur Längsachse 20) gemessen werden. Als Messzelle 70 kann eine eichfähige eingesetzt werden, beispielsweise die Lastzelle Typ SO/ED21 der Anmelderin. Die Auswertung der Messresultate der Lastmesszelle 70 erfolgt, wie alle anderen Auswerteaufgaben in allen erfindungsgemässen Ausführungsformen auf dem zugeordneten Rechner.

Fig. 4e zeigt beispielhaft den Verlauf des Betrags der Zugkraft F, aufgetragen über dem vom Haken 7 während dem Aufladen eines Containers 3 auf einen LKW 1 zurück gelegten Arbeitsweg s. Dabei ist hier mit F_{beladen} die Zugkraft F während dem Beladevorgang eines gefüllten Containers 3 und mit F_{entladen} der Entladevorgang eines leeren Containers 3 bezeichnet. Die Kraft F ist aus der von der Lastmesszelle 16 detektierten Querkraft Q durch den Rechner berechnet worden, s. die Beschreibung zu Figur 2.

Im Diagramm der Figur 6 lassen sich die drei in der Beschreibung zu Figur 1c genannten Phasen unterscheiden:
F_{beladen}: In der ersten Phase wird der Container 3 durch den Haken 7 ergriffen (der Arbeitsweg beginnt bei s₀), vorne angehoben und so weit vorgezogen, bis dessen hinteres Ende 13 vor dem Abheben steht, was bei s₁ der Fall ist. In dieser Phase rüttelt der Container 3, da dessen Ende 13 über den Boden geschleppt wird; die notwendige Zugkraft F_{beladen} steigt an.

In der zweiten Phase, beginnend bei s₁ und endend bei s₂, hat der Container 3 hinten keine Berührung mit dem Boden mehr, die Bewegung ist ruhig. Die notwendige Kraft F_{be}-_{laden} fällt ab, bis das vordere Ende 10 des Containers auf die Ladefläche 4 aufgesetzt ist oder bevorzugt (s. nachstehend) auf eine nur geringe Höhe über der Ladefläche 4 abgesenkt ist.

In der dritten Phase, beginnend bei s₂ und endend bei s₃, wird der Container 3 noch vorgeschoben, bis er entweder seine gewollte Endlage erreicht hat oder die Reibungskraft beim Vorschieben des Containers 3 ermittelt ist. F_{beladen} (ebenso F_{entladen}) entspricht in dieser Phase der Reibungskraft, da der Container im Wesentlichen horizontal verschoben wird, das Gewicht bei der Verschiebearbeit somit keine Rolle spielt.

Die verschiedenen Randbedingungen für die Verschiebung des Containers 3 zwischen s₂ und s₃ können sein:
- Einmal kann die Ladefläche (nebst den Rollen 12 an deren Kante 11) selbst ebenfalls Rollen enthalten, über die der Container 3 auf der Ladefläche 4 aufliegend verschoben werden kann. Damit besitzt die Reibungskraft des auf die Ladefläche 4 abgesenkten Containers 3 eine ähnliche Grösse wie die Reibungskraft, die durch die Rollen 12 während der zweiten Phase erzeugt wird.
- Dann kann die Ladefläche 4 selbst ohne Rollen ausgebildet sein, so dass die Reibungskraft des auf die Ladefläche 4 abgesenkten Containers 3 in der dritten Phase erheblich grösser ist als die während der zweiten Phase an den Rollen 12 der Kante 11 auftretende Reibungskraft.
- Schliesslich kann der Container 3 bevorzugt in der zweiten Phase zwar abgesenkt werden, aber nicht so weit, dass er die Ladefläche 4 berührt, und in dieser Position mit nur gering angehobenem vorderen Ende 10 in der dritten Phase zwischen s₂ und s₃ verschoben werden. Dadurch liegt er nach wie vor nur auf den Rollen 12 an der Kante 11 auf, so dass die Zugkraft F recht genau deren Reibungskraft entspricht. Diese Art der Messung der Reibungskraft ist bevorzugt.

F_{entladen} : Umgekehrt gilt für den Fall, dass der Container 3 abgeladen wird: bevorzugt bei s₃, oder auch bei s₂, wird dessen vorderes Ende 10 angehoben und nach hinten gestossen, bis dessen hinteres Ende 13 bei s₁ auf dem Boden aufsetzt. F_{entladen} steigt nach s₂ an.

Das Wiegefenster zur Ermittlung des Gewichts eines zu ladenden Containers 3 beginnt entsprechend bei s₁ und endet bei s₂, bevorzugt jedoch erst bei s₃:
Trotz dem Einsatz von Rollen 12 an der Ladekante 11 lässt sich nicht vermeiden, dass die beim hochziehen des Containers an der Ladekante 11 entstehenden Reibungskräfte gross genug sind, um das Messresultat zu verfälschen (werden an der Ladekante Rollen 12 eingesetzt, kann je nach deren Wartungszustand die Reibung - genauer: der Rollwiderstand - zwischen 1 und 10% der Zugkraft F betragen), so dass eine Korrekturgrösse benötigt wird. Diese kann einerseits für eine gegebene Lastmesseinrichtung eine Konstante sein, z.Bsp. ermittelt durch Versuche, oder vorzugsweise die beim Beladen korrekt ermittelte Korrekturgrösse, welche dann auch das konkrete Gewicht des Containers berücksichtigt. Diese korrekt ermittelte Korrekturgrösse ergibt sich aus dem Vorschub des Containers 3 zwischen s₂ und s₃ direkt aus der dann gerechneten Zugkraft F. Wie oben erwähnt wird dazu bevorzugt der Container 3 zwischen s₂ und s₃ zwar abgesenkt, aber so, dass dessen vorderes Ende 10 nur gering angehoben ist, so dass der Container 3 die Ladefläche 4 noch nicht berührt; dann lässt sich die Korrekturgrösse mit grosser Genauigkeit ermitteln.

Damit ist - sowohl für den Belade- als auch für den Entladevorgang - das Wiegefenster auf der einen Seite begrenzt durch den Moment, in dem das hintere Ende der Last vom Untergrund abgehoben wird oder auf diesem aufsetzt (s₁).

Auf der anderen Seite ist das Wiegefenster begrenzt ist durch den Moment, in dem das vordere Ende der Last durch das Lasthebegerät auf der Ladefläche abgesetzt oder von dieser abgehoben wird (s₂ oder s₃) oder nach der Messung der Reibungskraft gestoppt wird (bzw. zur Messung angeschoben wird).

Bevorzugt besitzt das Wiegefenster eine an seiner anderen Seite angrenzende Zone, die zwischen s₂ und s₃ liegt, in der wie oben beschrieben das vordere Ende 10 des Containers 3 nur gering angehoben über eine Strecke entlang der Ladefläche 4 verschoben wird, um die dabei ermittelte Querkraft zur rechnerischen Bestimmung einer der Reibungskraft der Last entsprechenden Korrekturgrösse zu verwenden. Die Korrekturgrösse wiederum wird bei der rechnerischen Bestimmung des um die Reibung bereinigten Gewichts der Last verwendet.

Wie in der Beschreibung zu Figur 4a erwähnt, kann aus dem Verlauf der Kraft F durch geeignete Rechnung das Gewicht des Containers 3 berechnet werden. Dies geschieht bevorzugt dadurch, dass durch Integration die Fläche unter der Kurve von F im Wiegefenster bestimmt wird, die ein Mass für das Gewicht des Containers darstellt und anschaulich die Arbeit (d.h. Kraft mal Weg) für die Verschiebung des Containers nach vorne, entgegen der Reibungskraft, plus die Arbeit für das Hoch-Heben des Containers 3 auf die Ladefläche 4 enthält (entsprechend umgekehrt für den Entlade-Vorgang).

Für erhöhte Genauigkeit wird ein der Reibungskraft entsprechender Flächenanteil (weisse Fläche im Diagramm von Fig 4e zwischen s₁ und s₃) von der Gesamt-Fläche unter der Kurve F_{beiaden} oder F_{entladen} subtrahiert, so dass der Einfluss der Reibungskraft eliminiert ist. Die Schraffierten Flächen "Brutto" und "Tara" sind dann ein von der Reibungskraft bereinigtes Mass für das Gewicht eines vollen, zu ladenden bzw. eines leeren, zu entladenden Containers.

Da die Geometrie von Lastmessgerät und Container bekannt ist, und die Bewegung zwangsläufig erfolgt, kann auch an jedem Punkt zwischen s₁ und s₂ bzw. s₃ die Vertikalkomponente von F bestimmt, über die zurückgelegte Höhe integriert und durch die Gesamthöhe dividiert werden, was das gesuchte Gewicht des Containers 3 ergibt.

Andererseits, da im Diagramm von Fig. 4e die Fläche unter der Kurve F bereits ein Mass für das Gewicht des Containers 3 darstellt, kann die Multiplikation des Flächenwertes (brutto oder tara, wie immer je nachdem, ob z.Bsp. ein voller Container 3 geladen oder ein leerer Container entladen wird) mit einer Konstanten direkt zum gesuchten Gewicht führen. Diese Konstante ist ein Geometriefaktor, dessen Wert von der Geometrie des Lastmessgeräts und des Containers 3 abhängt.

Der Geometriefaktor kann einerseits rechnerisch, andererseits durch Versuche ermittelt werden. Bevorzugt wird er rechnerisch ermittelt, in den Datenspeicher des Rechners eingegeben, worauf die Lastmesseinrichtung im Feldversuch mit verschiedenen Containern kalibiert wird.

Die kleinen Variationen des Rollreibungsbeiwertes beim Arbeitsvorgang werden durch die Integration weggemittelt.

Natürlich kann der Flächenwert nur angenähert berechnet werden, indem nur für einzelne Werte zwischen s₁ und s₃ die Querkraft Q und damit die Kraft F ermittelt und rechnerisch verwertet wird.

Entsprechend wird der Fachmann je nach der gewünschten Genauigkeit der Gewichtsangabe die Anzahl der zwischen s₁ und s₃ zu bestimmenden Werte von F und damit den Grad der Linearisierung der Kurven für F im Diagramm gemäss Fig. 4e festlegen.

Schliesslich sei noch angemerkt, dass der Berechnungsgang gemäss Figur 4e auch über eine Teilhöhe erfolgen kann.

Ebenso kann der Fachmann ausgehend von der vorliegenden Beschreibung einen im konkreten Fall geeigneten Rechnungsgang bestimmen, nach welchem der Rechner aus den Signalwerten der Lastmesszelle das Gewicht des Containers ermittelt. Die entsprechende Programmierung und auch die Auststattung des Rechners im Hinblick auf die notwendige Hardware ist dem Fachmann ebenfalls im Rahmen seines Fachwissens bekannt und ohne weiteres möglich.

Schliesslich ist es bekannt, dass an einem Container 3 ein Transponder-Chip angebracht werden kann (nicht dargestellt). Dieser trägt die Typen-Charakteristik des Containers 3 zusammen mit individualisierenden Merkmalen, wie einer Laufnummer oder dem Leergewicht. So ist es angezeigt, den Lastwagen 1 mit einem Lesegerät auszurüsten, welches diese Angaben aus dem Transponder-Chip auslesen und an den Rechner übermitteln kann. Ein solcher Transponder-Chip trägt auch die Information zur zulässigen Maximallast sowohl für den ganzen Container 3, als auch für die Last am Haken 6. Dies kann benützt werden, um sowohl das Anheben als auch das Aufladen eines überfüllten Containers 3 zu verhindern oder beim Vorliegen einer Überlast ein entsprechendes optisches oder/und akustisches Signal zu erzeugen.

Ein Alarm kann bei noch einer weiteren Ausführungsform auch dann vorgesehen werden, wenn die Reibungskraft eine vorgegebene Grösse überschreitet, z.B. als Signal dafür, dass die Rollen 12 nicht funktionsfähig (Wartung) sind oder dass der Container 3 nicht korrekt auf diesen aufliegt.

Zusammenfassend ergibt sich nach der vorliegenden Erfindung ein Verfahren Verfahren zum Messen des Gewichts einer Last, die mit einem Lasthebegerät über die Kante einer erhöhten Ladefläche verschoben und so auf diese hinauf gezogen oder von dieser herunter gestossen wird, wobei während diesem Arbeitsvorgang und so lange die Last während der Verschiebung vom Untergrund abgehoben auf der Kante der Ladefläche aufliegt, in einem durch die Last belasteten Träger des Lasthebegeräts während dessen Durchgang durch eine vorbestimmte Bewegungslage eine aufgrund der Verschiebung der Last in ihm momentan wirkende Kraft *(in einem durch die Last belasteten Träger meint die Last bewegender Träger)* gemessen und diese zur rechnerischen Bestimmung des Gewicht der Last bestimmt wird.

Im ersten Ausführungsbeispiel gemäss den Figuren 3a und 3b wird für eine Last mit gleichförmig verteilter Masse die im Träger des Lasthebegeräts momentan wirkende Axialkraft gemessen. In einer bevorzugten Abwandlung davon werden im Fall der ungleichförmig verteilten Masse zusätzlich die auf an der Kante der Ladefläche angeordnete Rollen wirkende Kräfte erfasst und in die Berechnung mit einbezogen.

In einem weiteren Ausführungsform gemäss den Figuren 4a bis 4e wird für eine Last mit gleichförmig oder ungleichförmig verteilter Masse die im Träger des Lasthebegeräts über ein Wiegefenster wirkende Querkraft gemessen und aus deren Verlauf das Gewicht berechnet. Bevorzugt wird dabei die während der Verschiebung der Last auftretende Reibungskraft ebenfalls erfasst und als Korrekturfaktor zur präzisen Messung des Gewichts verwendet.

Zur Ausführung dieses Verfahrens dient ein Lastmessgerät mit mindestens einem für die Verschiebung einer Last derart verfahrbaren Träger, dass die Last über die Kante einer erhöhten Ladefläche verschoben und so auf diese hinauf gezogen oder von dieser herunter gestossen werden kann, mit einer in einem Trägerabschnitt des Trägers angeordnete Lastmesszelle zur Bestimmung einer im Trägerabschnitt während der Arbeitsbewegung wirkenden Kraft und mit einem betriebsfähig mit der Lastmesszelle verbundenen Rechner, der ausgebildet ist, in einer vorbestimmten Bewegungslage des Trägerabschnitts die Kraft-Signale der Lastmesszelle auszuwerten und mit diesen das Gewicht der Last zu ermitteln.

In der ersten Ausführungsform gemäss Figur 2b sind die Deformationssensoren der Lastmesszelle bevorzugt parallel und quer zur Längsachse des Trägerabschnitts angeordnet. In einer zweiten Ausführungsform bevorzugt im Winkel von 45° dazu.

## Patentansprüche

1. Verfahren zum Messen des Gewichts einer Last, die mit einem einen Träger und einen diesen antreibenden Hydraulikzylinder aufweisenden Lasthebegerät (2) über die Kante (11) einer erhöhten Ladefläche (4) verschoben und so auf diese hinauf gezogen oder von dieser herunter gestossen wird, **dadurch gekennzeichnet, dass** während diesem Arbeitsvorgang und so lange die Last während der Verschiebung vom Untergrund abgehoben auf der Kante der Ladefläche (4) aufliegt, in einem durch die Last belasteten und durch den Hydraulikzylinder angetriebenen Träger des Lasthebegeräts (2) während dessen Durchgang durch eine vorbestimmte Bewegungslage eine aufgrund der Verschiebung der Last in ihm momentan wirkende Axialkraft (A) durch einen die im Träger wirkende Axialkraft (A) detektierenden Deformationssensor (16,70), gemessen und diese zur rechnerischen Bestimmung des Gewicht der Last bestimmt wird wobei die vorbestimmte Bewegungslage des Trägers (5) des Lasthebegeräts (2) dessen Lage unmittelbar vor dem Aufsetzpunkt der Last auf der Ladefläche (4) entspricht, und wobei weiter zur rechnerischen Bestimmung des Gewichts der Last deren auf die Kante (11) der Ladefläche (4) wirkende Kraft verwendet wird.

2. Verfahren nach Anspruch 1, wobei die Kante (11) der Ladefläche (4) durch Rollen (12 ) gebildet wird, die an mindestens einem an der Ladefläche (4) vorgesehenen Rollenträger (39) angeordnet sind, und wobei aus dem im mindestens einen Rollenträger (39) aufgrund der Last wirkenden Biegemoment die von den Rollen (12) während dem Durchgang durch die vorbestimmte Bewegungslage des Trägers des Lasthebegeräts (2) aufgenommenen Gewichtskräfte (R) der Last bestimmt und zusätzlich zur rechnerischen Bestimmung des Gewichts der Last verwendet werden.

3. Verfahren nach Anspruch 2, wobei das im mindestens einen Rollenträger (39) wirkende Moment über die Durchbiegung des Rollenträgers (39) erfasst wird

4. Verfahren nach Anspruch 2, wobei die Kante (11) der Ladefläche (4) durch Rollen (12) gebildet wird, die an mindestens einem an der Ladefläche (4) vorgesehenen Rollenträger (39) angeordnet sind, und wobei aus der im mindestens einen Rollenträger (39) aufgrund der Last wirkenden Querkraft die von den Rollen (12) während dem Durchgang durch die vorbestimmte Bewegungslage des Träger des Lasthebegeräts (2) aufgenommenen Gewichtskräfte (R) der Last bestimmt werden und wobei bevorzugt die Querkraft durch einen Lastmesssensor bestimmt wird, der zwei rechtwinklig zu einander in ein Rohr eingesetzte Deformationssensoren aufweist.

5. Lastmessgerät zur Ausführung des Messverfahrens nach einem der Ansprüche 1 bis 4, mit mindestens einem für die Verschiebung einer Last derart durch einen Hydraulikzylinder angetriebenen Träger (5), dass die Last über die Kante (11) einer erhöhten Ladefläche (4) verschoben und so auf diese hinauf gezogen oder von dieser herunter gestossen werden kann, **gekennzeichnet durch** eine in einem Trägerabschnitt (15) des Trägers (5) angeordnete Lastmesszelle (16) zur Bestimmung einer im Trägerabschnitt (15) während der Arbeitsbewegung wirkenden Kraft und durch einen betriebsfähig mit der Lastmesszelle (16) verbundenen Rechner, der ausgebildet ist, in einer vorbestimmten Bewegungslage des Trägerabschnitts (15) die Kraft-Signale der Lastmesszelle (16) auszuwerten mit diesen das Gewicht der Last zu ermitteln wobei die Lastmesszelle (16) ausgebildet ist, die im Trägerabschnitt (15) herrschende Axialkraft (A) zu messen und der Rechner ausgebildet ist, die unmittelbar vor dem Aufsetzen der Last auf die Ladefläche (4) herrschende Axialkraft (A) auszuwerten und anhand dieser das Gewicht der Last zu ermitteln, wobei an der Kante (11) der Ladefläche (4) Rollen (12) für das Verschieben der Last über die Kante (11) vorgesehen sind, welche Rollen (12) an mindestens einem Rollenträger (39) angeordnet sind, der sich bei einer Belastung der Rollen (12) durch eine Last dieser entsprechend durchbiegt und weiter Sensoren (48) vorgesehen sind, welche die Durchbiegung des mindestens einen Rollenträgers (39) detektieren, und wobei der Rechner ausgebildet ist, die Durchbiegungs-Signale der Sensoren auszuwerten und ebenfalls zur Ermittlung des Gewichts der Last zu verwenden.

6. Lastmessgerät nach Anspruch 5, wobei die Lastmesszelle (16) als Rohr (20) ausgebildet und senkrecht zur Längsachse des Trägerabschnitts (15) angeordnet ist, und wobei zwei Deformationssensoren (22,23) im Rohr (20) eingesetzt und zu einander im Winkel von im Wesentlichen 90° angeordnet sind, derart, dass der eine Sensor (22,23) bei veränderter Axialkraft A die Vergrösserung des einen zugeordneten Durchmessers des Rohrs (20) und der andere Sensor (23,22) die Verkleinerung des anderen ihm zugeordneten Durchmessers misst, wobei die Deformationssensoren (22,23) vorzugsweise als Schwingsaitensensoren ausgebildet sind.

## Claims

1. A method for measuring the weight of a load, which is moved over the edge (11) of an elevated loading area (4) using a load lifting device (2) comprising a carrier and a hydraulic cylinder propelling this, thereby being pulled up onto this or being struck down from this, **characterized in that**, during this operational process, and as long as the load lies on the edge (11) of the loading area (4) during the movement when lifted from the ground, in a carrier of the load lifting device (2) burdened by the load and propelled by the hydraulic cylinder during its passage through a predetermined movement position, due to the movement of the load, an axial force (A) momentarily acting in it is measured by a deformation sensor (16, 70), detecting the axial force (A) acting within the carrier, and this is determined for the mathematical determination of the weight of the load, wherein the predetermined movement position of the carrier (5) of the load lifting device (2) corresponds to its position immediately in front of the touchdown point of the load on the loading area (4), and wherein, furthermore, for the mathematical determination of the weight of the load, whose force acting on the edge (11) of the loading area (4) is used.

2. The method according to Claim 1, wherein the edge (11) of the loading area (4) is formed by rollers (12), which are arranged on at least one roller carrier (39) provided on the loading area (4), and wherein the weight forces (R) of the load taken on by the rollers (12) during the passage through the predetermined movement position of the carrier of the load lifting device (2) are determined from the bending torque acting within the at least one roller carrier (39) due to the load and are additionally used for the mathematical determination of the weight of the load.

3. The method according to Claim 2, wherein the torque acting with at least one roller carrier (39) is detected via the deflection of the roller carrier (39) .

4. The method according to Claim 2, wherein the edge (11) of the loading area (4) is formed by rollers (12), which are arranged on at least one roller carrier (39) provided on the loading area (4), and wherein the weight forces (R) of the load taken on by the rollers (12) during the passage through the predetermined movement position of the carrier of the load lifting device (2) are determined from the shear torque acting within the at least one roller carrier (39) due to the load and wherein, preferably, the shear force is determined by a load measuring sensor, which comprises two deformation sensors, which are at a right angle to one another, having been inserted into a tube.

5. A load measuring device for the carrying out the measuring method according to any one of Claims 1 to 4, with at least one carrier (5) propelled for moving a load through a hydraulic cylinder in such a way that the load is moved over the edge (11) of an elevated loading area (4) and pulled up on to this or struck down from this in this way, **characterized by** a load measuring cell (16) arranged in a carrier section (15) of the carrier (5) for determining a force acting in the carrier section (15) during the operational movement and by a computer that is operationally connected to the load measuring cell (16) and designed to evaluate the force signals of the load measuring cell (16) in a predetermined movement position of the carrier section (15), thereby determining the weight of the load using these signals, wherein the load measuring cell (16) is designed to measure the axial force (A) prevailing in the carrier section (15) and the computer is designed to evaluate the prevailing axial force (A) immediately before placing the load onto the loading area and determine the weight of the load on the basis of this (4), wherein, on the edge (11) of the loading area (4), rollers (12) are provided for moving the load over the edge (11), which rollers (12) are arranged on at least one roller carrier (39), which deflects when the rollers (12) are burdened by a load of these accordingly, and other sensors (48) are provided that detect the deflection of the at least one roller carrier (39), and wherein the computer is designed to evaluate the deflection signals of the sensors and also to use them to determine the weight of the load.

6. The load measuring device according to Claim 5, wherein the load measuring cell (16) is designed as a tube (20) and is arranged perpendicularly to the longitudinal axis of the carrier section (15), and wherein two deformation sensors (22, 23) are inserted within the tube (20) and are arranged at an essentially 90° angle in such a way that the one sensor (22, 23) measures the enlargement of the one associated diameter of the pipe (20) when the axial force A changes, and the other sensor (23, 22) measures the reduction of the other diameter associated with it, wherein the deformation sensor (22, 23) are preferably designed as vibrating wire sensor.

## Revendications

1. Procédé de mesure du poids d'une charge, qui est déplacée avec un appareil de levage de charge (2) comportant un support et un vérin hydraulique entraînant celui-ci au-dessus du bord (11) d'une surface de chargement élevée (4) et qui est ainsi montée ainsi sur celle-ci ou descendue de celle-ci, **caractérisé en ce que** pendant cette opération de travail et tant que la charge levée du fond pendant le déplacement repose sur le bord (11) de la surface de chargement (4), dans un support sollicité par la charge et entraîné par le vérin hydraulique de l'appareil de levage de charge (2) pendant le passage de celui-ci par une position de mouvement prédéterminée, une force axiale (A) agissant momentanément dans celui-ci en raison du déplacement de la charge , est mesurée par un capteur de déformation (16, 70) détectant la force axiale (A) agissant dans le support et celle-ci est déterminée pour la détermination mathématique du poids de la charge, sachant que la position de mouvement prédéterminée du support (5) de l'appareil de levage de charge (2) correspond à la position de celui-ci directement avant le point de dépose de la charge sur la surface de chargement (4) et sachant en outre que pour la détermination mathématique du poids de la charge de celle-ci, une force agissant sur le bord (11) de la surface de chargement (4) est utilisée.

2. Procédé selon la revendication 1, sachant que le bord (11) de la surface de chargement (4) est formé par des rouleaux (12), qui sont disposés sur au moins un support à rouleaux (39) prévu sur la surface de chargement (4) et sachant que les forces dues au poids (R) de la charge absorbées par les rouleaux (12) pendant le passage par la position de mouvement prédéterminée du support de l'appareil de levage de charge (2) sont déterminées à partir du couple de flexion agissant dans au moins un support à rouleaux (39) en raison de la charge et sont utilisées en plus pour la détermination mathématique du poids de la charge.

3. Procédé selon la revendication 2, sachant que le couple agissant dans au moins un support à rouleaux (39) est saisi par le biais de la flexion du support à rouleaux (39) .

4. Procédé selon la revendication 2, sachant que le bord (11) de la surface de chargement (4) est formé par des rouleaux (12), qui sont disposés sur au moins un support à rouleaux (39) prévu sur la surface de chargement (4) et sachant que les forces dues au poids (R) de la charge absorbées par les rouleaux (12) pendant le passage par la position de mouvement prédéterminée du support de l'appareil de levage de charge (2) sont déterminées à partir de la force transversale agissant dans au moins un support à rouleaux (39) en raison de la charge et sachant que la force transversale est de préférence déterminée par un capteur de mesure de charge, qui comporte deux capteurs de mesure de déformation insérés à angle droit l'un par rapport à l'autre dans un tube.

5. Appareil de mesure de charge pour exécuter le procédé de mesure selon l'une quelconque des revendications 1 à 4, avec au moins un support (5) entraîné par un vérin hydraulique pour le déplacement d'une charge de telle manière que la charge peut être déplacée au-dessus du bord (11) d'une surface de chargement (4) élevée et être ainsi montée sur celle-ci ou descendue de celle-ci, **caractérisé par** une cellule de mesure de charge (16) disposée dans une section de support (15) du support (5) pour la détermination d'une force agissant dans la section de support (15) pendant le mouvement de travail et par un ordinateur relié de façon opérationnelle à la cellule de mesure de charge (16), qui est constituée pour évaluer les signaux de force de la cellule de mesure de charge (16) dans une position de mouvement prédéterminée de la section de support (15), pour déterminer avec celle-ci le poids de la charge, sachant que la cellule de mesure de charge (16) est constituée pour mesurer la force axiale (A) régnant dans la section de support (15) et l'ordinateur est constitué pour évaluer la force axiale (A) régnant directement avant la dépose de la charge sur la surface de chargement (4) et à l'aide de celle-ci pour déterminer le poids de la charge, sachant que sur le bord (11) de la surface de chargement (4) des rouleaux (12) sont prévus pour le déplacement de la charge au-dessus du bord (11), lesquels rouleaux (12) sont disposés sur au moins un support à rouleaux (39), qui fléchit de façon correspondante lors d'une sollicitation des rouleaux (12) par une charge de ceux-ci et d'autres capteurs (48) sont prévus, lesquels détectent la flexion d'au moins un support à rouleaux (39) et sachant que l'ordinateur est constitué pour évaluer les signaux de flexion des capteurs et les utiliser également pour déterminer le poids de la charge.

6. Appareil de mesure de charge selon la revendication 5, sachant que la cellule de mesure de charge (16) est constituée sous la forme d'un tube (20) et est disposée perpendiculairement à l'axe longitudinal de la section de support (15) et sachant que deux capteurs de déformation (22, 23) sont insérés dans le tube (20) et sont disposés en angle, pour l'essentiel à 90°, l'un par rapport à l'autre de telle manière qu'un capteur (22, 23) mesure lors de la variation de la force axiale A, l'augmentation d'un diamètre attribué du tube (20) et l'autre capteur (23, 22) mesure la diminution de l'autre diamètre qui lui est attribué, sachant que les capteurs de déformation (22, 23) sont constitués de préférence comme des capteurs à corde vibrante.
